# EUROPÄISCHE PATENTANMELDUNG

(11) **EP 2 060 476 A1**
(43) Veröffentlichungstag der Anmeldung: **20.05.2009**
(21) Anmeldenummer: 08019153.9
(22) Anmeldetag: 31.10.2008
(51) Int. Cl.: B62D 55/10, B62D 55/104

(54) **Laufwerksmodifikation für eine Panzerhaubitze**

(30) Priorität: 01.11.2007 DE 202007015270 U
(71) Anmelder: Rheinmetall Landsysteme GmbH, 24107 Kiel (DE)
(72) Erfinder: Kühl, Manfred, 24229 Schwedeneck (DE)
(74) Vertreter: Dietrich, Barbara

(57) **Zusammenfassung**

Vorgeschlagen wird ein umrüstbares Panzerfahrzeug (10) mit einem Kettenlaufwerk und zwei, beidseitig am Fahrzeug angebrachte Laufrollenstationen, bei welchem anstelle der ursprünglichen Kette des Panzerfahrzeups (10) eine Kette eines anderen Fahrzeugtyps aufgezogen wird. Dazu werden anstelle der bisherigen Schwingarme an gleicher Position Hydrop-Elemente (1) angesetzt, wobei zur Anbringung der Hydrop-Elemente (1) Adapterflansche (2, 3) vorgesehen sind, die bauliche und / oder funktionelle Differenzen zwischen den Positionen der ursprünglichen Schwingarme und denen der Hydrop-Elemente (1) ausgleichen.

## Beschreibung

Die Erfindung betrifft eine Modifikation eines Laufwerkes bzw. Antriebes für eine Panzerhaubitze.

Aufgrund der erreichten Belastungsgrenzen aller mechanischen Bauteile der derzeitigen Drehstabfedersysteme beispielsweise der Panzerhaubitze ist eine Modifikation bzw. Leistungssteigerung dieser Bauteile insbesondere unter dem Gesichtspunkt der Wirtschaftlichkeit wenig Erfolg versprechend. Diese bekannten drehstabgefederte Laufwerke (DE 32 45 880 A1) werden in neuester Zeit durch Hydropfedern abgelöst. Ein derartiges Hydrop-Element ist beispielsweise aus der DE 103 28 541 A1 bekannt, das zusätzlich noch über eine Vorwärmeinrichtung verfügt.

Eine hydrostatische Vorrichtung zum Spannen einer Kette wird in der DE 44 12 552 B4 behandelt. Auch die DE 20 2006 013 043 U1 beschäftigt sich mit einer Kettenspanneinrichtung. Dabei wird ein Fahrwerk über eine Kolbenstange mit einem Leitrad in Wirkverbindung gebracht. Ein Spannzylinder bildet einen ersten Zylinder, ein Federzylinder eine zweiten. Beide bilden einen Doppelzylinder, wobei der zweite Zylinder den ersten Zylinder konzentrisch umfasst.

In der CH 518 212 A5 wird gleichfalls eine hydraulisch betätigte Einrichtung zur Veränderung der Spur bei Gleisketten beschrieben, die an zwei längs angeordneten Fahrwerksträgern, rechtwinklig zu diesen befestigten Holmen gelagert sind, wobei in den Holmen Hydraulikzylinder zur Veränderung der Spur enthalten sind.

Eine robuste Befestigung für ein Hydrop-Element wird in der DE 103 26 970 A1 behandelt.

Die Erfindung stellt sich die Aufgabe, eine Umrüstmöglichkeit für eine Panzerhaubitze anzugeben, bei der leistungsstärkere Gleisketten ohne größere Veränderungen am Fahrzeug selbst verwendet werden können, weniger Gewicht mit sich bringen und die Mobilität des Fahrzeuges erhöhen.

Gelöst wird die Aufgabe durch die Merkmale des Patentanspruchs 1. Vorteilhafte Ausgestaltungen sind in den Unteransprüchen aufgezeigt.

Dabei liegt dem Ganzen die Idee zugrunde, an ein vorhandenes Laufwerk, hier einer Panzerhaubitze, eine bereits bekannte und vorhandene jedoch beispielsweise breitere Kette beispielsweise eines Panzers, wie die eines Leo 2 anzubringen, obwohl Laufwerk und Kette ursprünglich nicht aufeinender abgestimmt worden sind. Es wird damit eine einfache, aber sehr effiziente Umrüstung von bekannten Panzerfahrzeugen anvisiert, was bisherigen Überlegungen entgegenstand, da insbesondere die Kettenräder am Seitenvorgelege eines Panzers gegenüber einem Serienkettenfahrzeug wesentlich größer sind und zudem die Ketten eines Panzers wesentlich höheren Anforderungen unterliegen als bei anderen Kettenfahrzeugen.

Grundsätzlich werden erfindungsgemäß in einem ersten Schritt die am Panzerfahrzeug vorhandenen Schwingarme durch Hydrop-Elemente ausgetauscht bzw. ersetzt, wobei die Hydrop-Elemente in etwa an die bisherigen Positionen der bisherigen Schwingarme als Innenarmelemente gesetzt werden. Dadurch entfallen die sonst bekannten Drehstäbe, die kompletten Schwingen einschließlich ihrer Lagerung, sowie die Linearstoßdämpfer mit ihren wannenseitig angeschweißten Halterungen, was eine wichtige Gewichtsreduzierung bewirkt.

Um das Problem der größeren Kettenräder zu lösen, wurde das Drehlager des ersten Hydrop-Elementes derart an eine Wanne des Panzerfahrzeuges angebaut, dass es um mehrere Millimeter, beispielsweise um ca. 35 mm, nach hinten versetzt wird, so dass durch die hierdurch entstehende Verkleinerung des Kettenanstiegwinkels eine Nutzung der vorhandenen Kette ermöglicht wird.

Als bevorzugtes Hydrop-Element hat sich ein so genannter Quebec der Firma Horstmann gezeigt. Die Quebec-Schwingen weisen einen nach unten ausgefederten Weg von wenigstens 100 mm auf, der nach oben gefederte Endanschlag der Schwinge beträgt ca. 230 mm bei einer mittleren Bodenfreiheit von beispielsweise 440 mm. Das macht in einigen Anwendungen eine Anpassung der Elemente notwendig.

Die Anpassung kann durch konstruktiv angepasste Adapterflansche ausgeglichen werden, die für die Anbindung der Hydrop-Elemente an die Wanne eines Panzerfahrzeuges verwendet werden, wodurch weitere mechanische Bearbeitungen der Wanne vermieden werden. Die Adapterflansche werden dazu in die vorhandenen Wannenaufnahmeflansche für die früheren Schwingarme eingebracht. Diese Flansche dienen ihrerseits zur Aufnahme der Befestigungselemente, wie beispielsweise Schrauben, der Hydrop-Elemente. Um die unterschiedlichen Lagen der Schwingen auszugleichen, beispielsweise wenn die erste Laufradschwinge um 90 mm höher angebracht werden muss oder wenn eine andere Laufradstation eine geschobene Laufrolle besitzt, werden die Adapterflanschen unterschiedlich ausgeführt.

Bevorzugt ist eine Anbringung dieser Flansche mittels Schweißverbindungen, wobei die zentrierten Adapterflansche mit der Seitenwand der Wanne verschweißt werden. Alternativen der Befestigung sind gleichwohl möglich.

Die Kettenspannung wird dadurch optimiert, dass die Gewindespindel des bisherigen Kettenspanners durch eine vom Fahrerplatz aus bedienbare Verstelleinrichtung ersetzt wird. Bei kaltem Laufwerk kann die Kettenspannung erhöht werden, um eine lose Kette zu verhindern, bei warmen Laufwerk wird die Kettenspannung reduziert, um eine Überbeanspruchung der Kette zu vermeiden.

Mit der vorliegenden Idee wird durch den Einsatz eines anderen Federsystems das Gewicht eingespart, das nunmehr der leistungsstärkeren Kette mit höherem Gewicht zu Verfügung steht.

Anhand eines Ausführungsbeispiels mit Zeichnungen soll die Idee der Erfindung näher erläutert werden. Es zeigt:
- Fig. 1: ein Hydrop-Element,
- Fig. 2: eine Anbindung des Hydrop-Elementes mittels Adapterflansch,
- Fig. 3: den Adapterflansch aus Fig. 2 in einer Außen- und einer Innenansicht,
- Fig. 4: eine Darstellung der Anbindung des ersten Adapterflansches aus Fig. 2 an eine Fahrzeugwanne,
- Fig. 5a-c: Federungswege der Hydrop-Elemente,
- Fig. 6: weitere Adapterflansche für weitere Hydrop-Elemente.

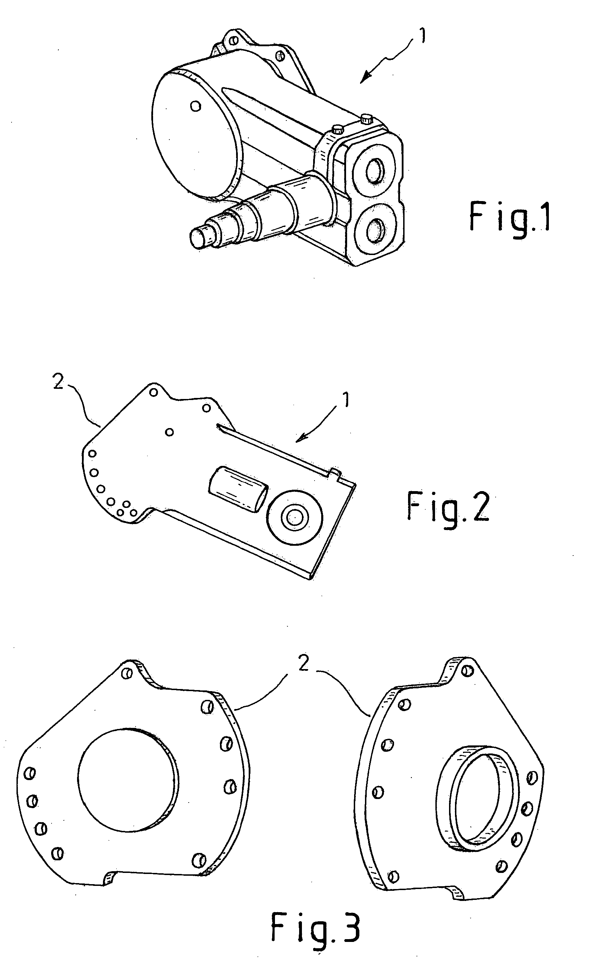

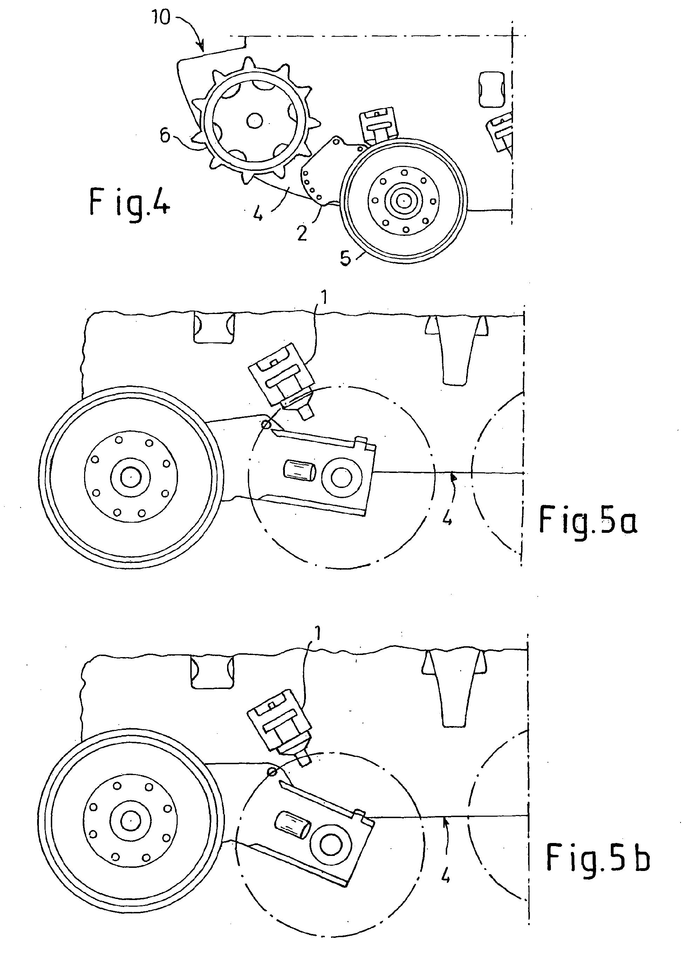

Fig. 1 zeigt ein Hydrop-Element 1, welches eine bekannte Drehstabschwinge an einem in Fig. 4 angedeuteten Panzerfahrzeug 10, beispielsweise einer Panzerhaubitze PzH 2000 ersetzen soll.

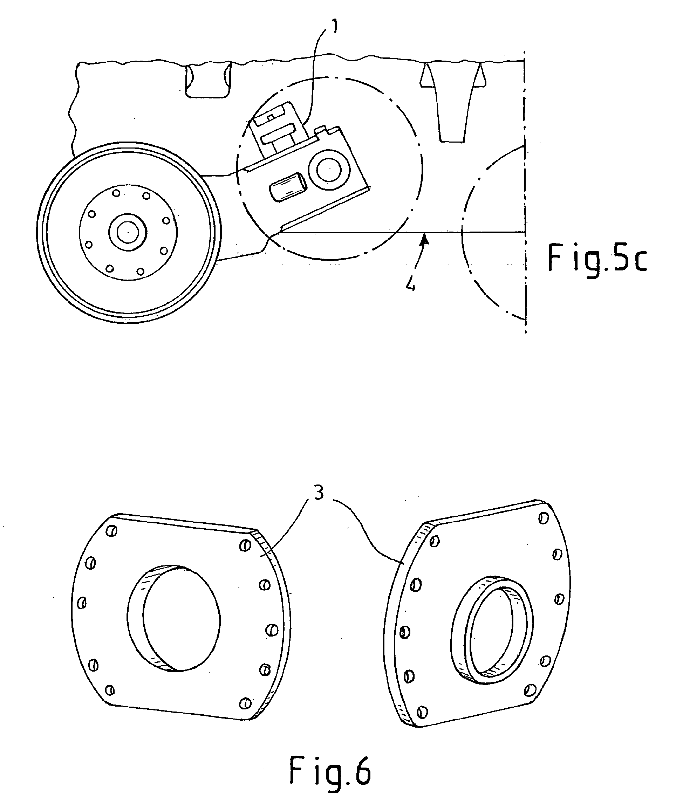

Die Hydrop-Elemente 1 sind über Adapterflansche 2, 3 (Fig. 3, Fig. 6) an eine Wanne 4 (Fig. 4) des Fahrzeuges 10 anbringbar. Die Verbindung des Hydrop-Elements 1 mit dem Adapter 2 zeigt Fig. 2.

Fig. 3 zeigt den Adapterflansch 2 für das erste Hydrop-Element 1 in einer Außen- und einer Innenansicht für ein in Fig. 4 dargestelltes Seitenvorgelege 7, Fig. 6 stellt die anderen Flansche 3 für die weiteren Elemente 1 dar.

Um keinerlei Einschränkungen bezüglich der funktionellen Laufwerksleistung der PzH 2000 durch die Umrüstung hinzunehmen, werden die gleichen Federwege realisiert (Fig. 5a-5c zeigen die Federungsanschläge beispielsweise der 5. Laufradstation). Ausgehend von der statischen Laufrollen Null-Lage, bei einer mittleren Bodenfreiheit von 440 mm, kann das Hydrop-Elemente 1 um 100 mm nach untern ausfedern. Ein oberer Endanschlag liegt ungefähr bei 230 mm. Unter voller Ausnutzung des inneren Kurbeitirebes ist dann ein Schwingenradius von 390 mm realisierbar.

Am Seitenvorlege 7 werden bei der Verwendung der breiteren Gleiskette des Panzers Leo 2 auch dessen Kettenräder 6 verwendet. Der größere Kopfkreisdurchmesser führt dazu, dass das Drehlager des ersten Hydrop-Elementes 1 um ca. 35 mm nach hinten gesetzt werden muss.

Die abgewandelte Geometrie des ersten Adapterflansches 2 gegenüber den anderen Flanschen 3 liegt darin begründet, dass die erste Laufradschwinge 5 bei der PzH um 90 mm höher gegenüber den anderen angebracht werden muss.

## Patentansprüche

1. Umrüstbares Panzerfahrzeug (10) mit einem Kettenlaufwerk und zwei, beidseitig am Fahrzeug angebrachte Laufrollenstationen, wobei anstelle der ursprünglichen Kette des Panzerfahrzeugs (10) eine Kette eines anderen Fahrzeugtyps aufgezogen wird und anstelle der bisherigen Schwingarme an gleicher Position Hydrop-Elemente (1) angesetzt werden, wobei zur Anbringung der Hydrop-Elemente (1) Adapterflansche (2, 3) vorgesehen sind, die bauliche und / oder funktionelle Differenzen zwischen den Positionen der ursprünglichen Schwingarme und denen der Hydrop-Elemente (1) ausgleichen.

2. Panzerfahrzeug nach Anspruch 1, **dadurch gekennzeichnet, dass** die erste Laufradschwinge (5) gegenüber den anderen Schwingen eine höhere Lage einnimmt.

3. Panzerfahrzeug nach einem der Ansprüche 1 oder 2, **dadurch gekennzeichnet, dass** die Adapterflansche (2, 3) aus einer Grundplatte bestehen mit entsprechender Gewindebohrung zur Befestigung der Hydrop-Elemente (1).

4. Panzerfahrzeug nach einem der Ansprüche 1 bis 3, **dadurch gekennzeichnet, dass** der Adapterflansch (2) für die erste Schwinge bzw. das erste Hydrop-Element (1) eine andere Geometrie als die anderen Adapterflansche (3) für die weiteren Schwingen der weiteren Hydrop-Elemente (1) aufweisen.

5. Panzerfahrzeug nach einem der Ansprüche 1 bis 4, **dadurch gekennzeichnet, dass** es sich beim Panzerfahrzeug (10) um eine Panzerhaubitze handelt.

6. Panzerfahrzeug nach einem der Ansprüche 1 bis 5, **dadurch gekennzeichnet, dass** die Kette von einem Panzer beispielsweise des Typs Leo 2 stammt.
